# FASCICULE DE BREVET EUROPEEN

(11) **EP 0 981 503 B1**
(45) Date de publication et mention de la délivrance du brevet: **30.01.2002**
(21) Numéro de dépôt: 98925711.8
(22) Date de dépôt: 14.05.1998
(51) Int. Cl.: C04B 16/08

(54) **UTILISATION DE PARTICULES DE POLYMERE ORGANIQUE HYDROPHOBE DANS LA FABRICATION DE BETONS ET MORTIERS ALLEGES**
VERWENDUNG VON HYDROPHOBEN, ORGANISCHEN POLYMERTEILCHEN BEI DER HERSTELLUNG VON LEICHTBETONEN UND LEICHTMÖRTELN
USE OF HYDROPHOBIC ORGANIC POLYMER PARTICLES FOR MAKING LIGHTWEIGHT-AGGREGATE CONCRETE AND MORTAR

(30) Priorité: 14.05.1997 FR 9705925
(43) Date de publication de la demande: 01.03.2000
(73) Titulaire: Agregats Artificiels B.S. Technologies, 92975 Paris La Defense Cedex 5 (FR)
(72) Inventeur: DE CADIER DE VEAUCE, Charles, 03140 Target (FR)
(74) Mandataire: Clisci, Serge
(86) Numéro de dépôt international: FR9800962
(87) Numéro de publication internationale: WO9851635

(56) Documents cités:
- EP-A- 0 185 583
- FR-A- 1 073 158
- FR-A- 2 421 856
- FR-A- 2 631 331
- GB-A- 2 027 005
- LU-A- 54 773
- NL-A- 7 206 498
- US-A- 5 622 556

## Description

### DOMAINE DE L'INVENTION

La présente invention a trait à une nouvelle utilisation de particules de polymère organique hydrophobe, notamment du type polystyrène, dans la fabrication de bétons et mortiers allégés.

Elle concerne également en tant que produits industriels nouveaux les granulats de polymère organique hydrophobe.

Jusqu'à présent il a été considéré que l'utilisation de particules de polymère organique hydrophobe constituait un inconvénient majeur dans le domaine de la fabrication des mortiers et bétons. Eu égard à la difficulté que représente la dispersion dans de l'eau de particules hydrophobes, une telle utilisation a été écartée *a priori* et n'a jamais été mise en oeuvre.

### ART ANTERIEUR

L'art antérieur relatif à l'utilisation dans le domaine des bétons et mortiers allégés d'un matériau hydrophobe, tel que le polystyrène, est notamment illustré par les publications suivantes : WO-A-9202468, FR-B-2574068 (qui correspond à EP-A-0185583), FR-A-1073158, FR-A-2421856, US-A-5622556, FR-A-2631331, GB-A-2027005, NL-A-7206498, LU-A-54773 et D.F. ORCHARD, Concrete Technology, vol. 1, 4th edition, Applied Science Publishers LTD, 1979, pages 162-163.

On sait que le polystyrène et les copolymères à base de styrène et d'hydrocarbure éthyléniquement insaturé, tels que les copolymères styrène/éthylène, styrène/propylène, styrène/butylène, styrène/butadiène et styrène/isoprène, sont des substances de nature hydrophobe qui présentent néanmoins du fait de leur mode de préparation des sites hydrophiles, à savoir au moins 150 milliéquivalents de groupes hydrophiles (-COOH, -OH, -NH₂ et/ou -SO₃H) par gramme de matière polymère, qui sont susceptibles de retenir une quantité relativement importante d'eau.

Malheureusement, il se trouve que ces sites hydrophiles constituent un inconvénient en ce sens qu'ils fournissent aux bétons et mortiers allégés, préparés à partir desdits polystyrène et copolymères hydrophobes, une teneur en eau résiduelle, mesurée après mise en équilibre desdits bétons et mortiers allégés fabriqués, supérieure ou égale à 100 l/m³.

D'une part, on a trouvé de façon surprenante qu'à l'équilibre une teneur en eau résiduelle supérieure à 100 l/m³ était néfaste vis-à-vis de la stabilité du matériau final séché (obtenu après mise en équilibre). D'autre part, l'art antérieur enseigne que le caractère hydrophobe du polystyrène expansé constitue un inconvénient majeur ; voir à cet effet (i) la demande PCT publiée WO-A-9202468 précitée où figure, page 4 lignes 16-17, la mention "en surmontant leur caractère hydrophobe" visant les particules de polystyrène expansé, et (ii) la publication de D.F. ORCHARD précitée qui fait état de particules d'agrégat léger ayant une structure à cellules ouvertes (voir page 162, fin du 2ème alinéa) et qui indique que pour pallier au caractère hydrophobe du polystyrène il est important de revêtir les particules de polystyrène notamment au moyen d'une résine époxy (voir page 162, 7 dernières lignes du 3ème alinéa intitulé "Polystyren as a Lightweight Aggregate").

De FR-A-1073158 précité est décrit un procédé de préparation d'éléments de construction (panneaux, corps moulés) à partir :
- de particules de matière plastique expansée dites à "pores fermés" (voir page 1, colonne de gauche, ligne 23) qui était broyée (voir page 1, colonne de droite, ligne 28) - ce qui implique une structure à "cellules ouvertes" -, cette matière plastique étant notamment du polystyrène (voir Ex 1),
- de liant,
- d'eau, et
- le cas échéant, d'une charge minérale.

De plus en ce qui concerne la structure des particules de matière plastique expansée et hydrophobe telle que le polystyrène, les documents visés dans FR-A-1073158 (voir page 1, colonne de gauche, lignes 34-36), à savoir FR-A-1030318 et FR-A-1054603, montrent que lesdites particules sont à "cellules ouvertes" et non à "cellules fermées" eu égard à leur mode d'obtention.

Selon l'art antérieur, on a été amené à réduire le caractère hydrophobe des particules de polystyrène expansé soit (i) en enrobant lesdites particules au moyen d'un revêtement ou enveloppe hydrophile notamment de nature peptidique ou protéinique (voir à cet effet WO-A-9202468 et FR-B-2574068 précités) ou encore d'un revêtement de résine époxy (voir à cet effet la publication de D.F. ORCHARD précitée), soit (ii) en broyant voire en micronisant lesdites particules expansées (voir à cet effet US-A-5 622 556 précité) pour augmenter la surface desdites particules au niveau de l'interface eau/polymère par le biais d'une structure dite à cellules ouvertes.

Par ailleurs, selon US-A-5 622 556, on prépare un matériau de construction ayant une teneur en eau à l'équilibre de 0,005 à 5 % v/v à partir de (i) des particules micronisées de mousse de polystyrène à surfaces irrégulières (élaborées par broyage ou déchiquetage ; voir colonne 3 lignes 19-21) dites à "cellules ouvertes" eu égard à leur mode de réalisation, (ii) un liant (ciment Portland plus éventuellement chaux), (iii) des particules de charge minérale (cendres, sable) et (iv) une très faible quantité d'eau (allant de 6 % v/v selon Ex 10 à 0,005 % v/v selon Ex 4). Selon les exemples 1-25 de US-A-5622556, le mélange (i)+(ii)+(iii) est humidifié puis moulé sous pression.

En bref, l'art antérieur sus-visé ne décrit ni ne suggère l'utilisation d'un polymère organique à cellules fermées et hydrophobe ayant une teneur en eau résiduelle inférieure ou égale à 5 % p/p (en poids d'eau par rapport au poids dudit polymère organique) pour l'obtention d'un matériau de construction allégé.

### BUT DE L'INVENTION

Selon l'un des aspects de l'invention, on se propose d'utiliser des particules de polymère organique expansé qui soient le plus possible hydrophobes, afin d'améliorer la stabilité des bétons et mortiers allégés.

Ainsi, l'on se propose d'utiliser des particules de polymère organique hydrophobe qui sont expansées, sont à cellules fermées et ont une teneur en eau résiduelle ou humidité résiduelle inférieure ou égale à 5 % p/p (en poids d'eau par rapport au poids dudit polymère organique) pour donner des éléments de constructions du type béton allégé, mortier allégé, enduit allégé ou encore plâtre allégé ayant à l'équilibre une teneur en eau résiduelle inférieure à 100 l/m³, et de préférence une teneur en eau résiduelle inférieure ou égale à 60 l/m³.

Il existe effectivement un besoin en matériau de construction du type précité contenant des particules de polymère organique hydrophobe expansé pour des applications particulières dans lesquelles il est important d'avoir rapidement une teneur en eau résiduelle (exprimée en volume par rapport au volume dudit matériau de construction) inférieure à 100 l/m³. En d'autres termes, on se propose de réduire la durée requise pour atteindre l'équilibre, qui en général varie selon le matériau de construction de 1 semaine à respectivement 6 mois, en 1-2 jours à respectivement quelques semaines, en faisant appel à des particules de polystyrène expansé ou d'un copolymère analogue ayant un caractère le plus hydrophobe possible. En d'autres termes, si on compte selon l'art antérieur une durée de séchage de 1 semaine pour une épaisseur de béton ou mortier de 1 cm, on se propose selon l'invention d'arriver à une durée de séchage de l'ordre de 1 heure pour une épaisseur de 1 cm.

### OBJET DE L'INVENTION

Selon l'invention, on préconise une nouvelle utilisation de particules de polymère organique expansé dans la fabrication d'un matériau de construction du type béton, mortier, enduit et plâtre allégés, caractérisée en ce que l'on fait appel à un granulat comprenant des (ou constitué de) particules de polymère organique expansé à cellules fermées et hydrophobe ayant une teneur en eau résiduelle (exprimée en poids par rapport au poids dudit granulat) inférieure ou égale à 5 % p/p.

Selon la présente invention, on préconise également en tant que produits industriels les granulats comportant lesdites particules de polymère organique expansé à cellules fermées et hydrophobe ayant une teneur en eau résiduelle inférieure ou égale à 5 % p/p.

### Description détaillée de l'invention

Pour l'obtention de bétons, mortiers, enduits et autres matériaux de construction allégés, l'on recommande donc de faire appel à des particules de polymère organique expansé à cellules fermées et hydrophobe ayant une teneur en eau

Il est important que le matériau polymère hydrophobe, selon l'invention, se trouve sous la forme de particules ou billes du type à cellules fermées logées à l'intérieur d'une enveloppe ou coquille continue imperméable aux liquides. Cette configuration est obtenue "en limitant l'expansion" du matériau polymère de façon à obtenir des cellules ou cavités dans la masse sans affecter substantiellement la surface. La structure résultante de chaque particule est dite "mousse à cellules fermées".

Par commodité, par "matériau polymère expansé et hydrophobe" on entend dans la présente demande un matériau polymère hydrophobe sous forme de particules du type dite "mousse à cellules fermées", qui a été expansé dans sa masse sans que surface ou coquille externe, imperméable aux liquides, ait été essentiellement affectée par l'expansion.

Convient à cet effet le polystyrène commercialisé par la société dite ATOCHEM sous la nomenclature GEDEXCEL® et destiné à la réalisation d'emballages. Pour être utilisées selon l'invention, les particules de ce polymère sont préalablement soumises à une expansion ne concernant que l'intérieur de leur masse.

D'un point de vue pratique, le matériau de construction selon l'invention, c'est-à-dire le béton, le mortier, l'enduit ou le plâtre allégés, aura après mise en équilibre une teneur en eau résiduelle (exprimée en volume par rapport au volume initial du matériau de construction) inférieure à 100 l/m³, de préférence une teneur en eau résiduelle inférieure ou égale à 60 l/m³ et mieux une teneur en eau résiduelle comprise entre 20 et 50 l/m³. La durée requise pour la mise en équilibre est alors nettement réduite ; par exemple elle est de l'ordre d'environ 2 à 6 semaines au lieu de 6 mois, ou de 1 à 2 jours au lieu d'une semaine.

Pour la fabrication des matériaux de construction, il suffit de malaxer le matériau polymère expansé de l'invention intervenant en tant que granulat organique, avec un liant (ciment Portland, chaux, laitier de haut-fourneau, plâtre et/ou leurs mélanges), de l'eau, et le cas échéant, des particules ou charges minérales (sable notamment) et d'éventuels autres adjuvants (agent tensioactif, colloïde entraîneur d'air, etc).

De façon avantageuse, selon un premier mode de réalisation, on recommande selon l'invention une association préalablement formée et comprenant (i) ledit matériau polymère expansé à cellules fermées et hydrophobe et (ii) au moins un desdits adjuvants.

Parmi les adjuvants utilisables, on peut mentionner ceux que l'on disperse de façon classique dans les matériaux de construction tels que les bétons, mortiers, enduits ou plâtres allégés, à savoir notamment :
- les agents fluidisants ou plastifiants,
- les colloïdes entraîneurs d'air,
- les agents tensioactifs, et
- les accélérateurs ou retardateurs de prise.

Les agents fluidisants ou plastifiants ont pour rôle de favoriser l'homogénéité du mélange particules organiques hydrophobes/liant/eau éventuellement complété avec une charge minérale (notamment du sable ou des graves) et/ou d'autres adjuvants. Ils permettent le pompage de ce mélange avant sa prise en masse, la diminution de la teneur en eau et par suite l'amélioration de performances mécaniques du matériau de construction pour une même concentration en liant. Parmi les agents fluidisants ou plastifiants qui conviennent, on peut notamment mentionner les phtalates (par exemple le phtalate de dioctyle), les oxalates, les stéarates métalliques ou organiques, les silicates organiques, les siloxanes, et les acides organiques.

Les colloïdes (ou agents) entraîneurs d'air ont pour rôle d'augmenter le volume du mélange particules organiques hydrophobes/liant/eau, qui est éventuellement complété avec une charge minérale et/ou d'autres adjuvants, et par suite celui du matériau de construction en résultant. Ils assurent l'incorporation d'air dans ledit mélange en vue d'améliorer l'isolation tant phonique que thermique dudit matériau, d'une part, et de diminuer la densité dudit matériau, d'autre part. Ils confèrent en outre l'avantage de
- diminuer la vitesse de sublimation des granulats organiques hydrophobes sous l'action de la chaleur, à des températures notamment supérieures à 200-250°C,
- augmenter la résistance au feu (retard à la propagation du feu et de la flamme) du matériau de construction,
- diminuer l'émission de vapeurs ou fumées nocives lors de la combustion du polystyrène ou des copolymères du styrène qui constituent le granulat organique hydrophobe, et
- augmenter la résistance aux cycles de gel/dégel et aux chocs thermiques.

Parmi les colloïdes entraîneurs d'air qui conviennent on peut notamment mentionner les protéines, les peptides et les substances les renfermant, par exemple le sang en poudre, le sang liquide additionné d'un anticoagulant, l'hémoglobine, etc.

La présence d'un agent tensioactif ionique ou non ionique n'est pas rédhibitoire vis-à-vis de la teneur en eau, à l'équilibre, du matériau de construction contenant des particules de polymère expansé à cellules fermées et hydrophobe. Ainsi quand on prépare un béton allégé à partir (i) de billes de polystyrène expansé (de granulométrie d'environ 20 mm) ayant une teneur en eau résiduelle de 0,7 % p/p, (ii) d'un liant classique (ciment Portland), (iii) de sable et (iv) d'eau, on obtient un béton allégé ayant à l'équilibre une teneur en eau résiduelle de l'ordre de 20-30 l/m³ ; et, quand on incorpore à la même composition un tensioactif hydrophile (notamment un tensioactif ionique), on obtient un béton allégé ayant à l'équilibre une teneur en eau résiduelle de l'ordre de 50-60 l/m³. L'agent tensioactif pouvant être utilisé ici permet d'assurer une meilleure répartition des particules du matériau polymère hydrophobe dans le mélange constitué par lesdites particules + le liant + l'eau + le cas échéant le ou les adjuvants.

Les agents accélérateurs de prise et les agents retardateurs de prise sont des produits bien connus dans le domaine des matériaux de construction. Quand on utilise les particules de polymère hydrophobe selon l'invention pour réalisation d'un béton ou mortier allégé en mettant en oeuvre un ciment à prise rapide, le séchage du matériau final intervient en quelques heures.

Selon un second mode de réalisation, on remplace lors de la préparation du mélange particules organiques hydrophobes/liant/eau/adjuvant, qui contient le cas échéant une charge minérale, l'association particules organiques hydrophobes/adjuvant par des particules organiques hydrophobes sur lesquelles on a préalablement déposé(s), ou lié(s), notamment par covalence ou adsorption, le ou les adjuvants. La technique de fixation par liaison covalente ou par adsorption sur des particules de polystyrène ou de copolymère de styrène est connue en particulier dans le domaine des dosages immunologiques, où l'on fait appel à des particules de latex liées à (i.e. "sensibilisées par") un réactif immunologique, par exemple une protéine, un antigène ou un anticorps. Voir à cet effet le brevet US-A-5 175 112 et la demande PCT publiée correspondante WO-A-90 08 321.

La liaison par covalence ou adsorption des particules organiques hydrophobes à l'adjuvant ou aux adjuvants est relativement faible dans le cadre de la mise en oeuvre de la présente invention. En effet, lors du malaxage, sous l'action du cisaillement ou frottement en présence du liant, la liaison particules organiques hydrophobes/adjuvant est rompue et l'adjuvant (ou une portion importante de celui-ci) se trouve réparti dans la masse du liant. Globalement, lesdites particules interviennent ici essentiellement en tant que véhicule ou vecteur de l'adjuvant en vue de son incorporation dans la masse du liant.

Grâce aux particules de polymère hydrophobe utilisées selon l'invention, qui n'ont pas été traitées selon l'art antérieur pour remédier à leur forte hydrophobicité, l'on réduit le temps de prise du matériau de construction et l'on diminue les risques de corrosion par l'eau des métaux susceptibles d'être incorporés dans ledit matériau de construction.

D'autres avantages et caractéristiques que l'invention seront mieux compris à la lecture qui va suivre d'exemples de réalisation. Ces exemples ne sont nullement limitatifs mais sont donnés à titre d'illustration.

### EXEMPLE 1

On malaxe à la température ambiante (15-25°C) dans une bétonnière un mélange constitué par les ingrédients (a) - (c) ci-après, l'ordre d'introduction de ces ingrédients dans la bétonnière étant le suivant :
liant (a), eau (b) puis particules de polystyrène (c) ;

| | |
|---|---|
| (a) liant hydraulique (ciment Portland CPJ 45) | 400 kg |
| (b) eau | 160 l |
| (c) particules de polystyrène (G =10-15 mm ; P = 12-13 g/l ; et W = 0,7 % p/p) | 800 l |

où les abréviations G, P et W représentent la granulométrie, la masse volumique et respectivement la teneur en eau résiduelle desdites particules de polystyrène,
en vue d'obtenir un produit du type béton pour chape.

### EXEMPLE COMPARATIF A1

On procède comme indiqué à l'exemple 1 ci-dessus en remplaçant les 800 l de particules de polystyrène hydrophobe par 800 litres de particules de polystyrène moins hydrophobe (G = 10-15 : P = 12-13 g/l ; et W = 5,1 % p/p).

### ESSAIS COMPARATIFS

On a évalué la perte en eau des produits de l'exemple 1 et de l'exemple comparatif homologue A1. Dans ce but, on a coulé les mélanges, obtenus par malaxage selon Ex 1 et A1, dans des moules en bois (1,5 m x 1 m x 0,1 m) dont l'intérieur (fond et paroi) était revêtu d'une pellicule de polyane de 150 micromètres d'épaisseur (relevée à la périphérie supérieure du moule) dite de lissage. La surface supérieure de chaque moulage a été lissée à la règle puis revêtue d'une pellicule de polyane (par exemple une pellicule commercialisée sous les noms de NIVARDUR® ou NIVDURS® ). Après démoulage les plaques obtenues ont été conservées à l'abri de la lumière et des courants d'air dans un local clos. Des éprouvettes (notamment du calibre 16-32) ont été confectionnées pour mesure de la masse volumique et de la résistance à la rupture en fonction du temps. Des échantillons ont été prélevés de ces éprouvettes, à équidistance de la périphérie et à des instants donnés, puis ont été placés dans des sacs plastiques pour transport jusqu'au CEBTP où la quantité d'eau résiduelle exprimée en % du poids initial a été mesurée.

Les résultats obtenus figurent dans le tableau I ci-après où To représente l'instant du coulage dans le moule.

**TABLEAU I**

| Teneur en eau à la température ambiante (15-25°C) | | |
|---|---|---|
| **Instant** | **Teneur en eau** | |
| | A1 | Ex 1 |
| T = To + 20 h | 10 % | 10 % |
| T = To + 72 h | 9.5 % | 6 % |
| T = To + 168 h | 7.8 % | 6 % |

Les résultats du tableau I mettent en évidence qu'à l'instant T = To + 72 h (i.e. 3 jours après le coulage dans le moule) le mélange durci selon l'invention (Ex 1) est déjà stabilisé en ce qui concerne sa teneur en eau, alors que ce n'est pas encore le cas pour le mélange durci comparatif (A1) à l'instant T = To + 168 h (i.e. 7 jours après le coulage dans le moule).

### EXEMPLE 2 ET ESSAIS COMPARATIFS

On a préparé par malaxage dans une bétonnière suivant l'exemple 1 ci-dessus un mélange constitué (suivant leur ordre d'incorporation) des ingrédients (a), (b), (c) et (d) ci-après :

| | | |
|---|---|---|
| (a) | sable (G = 0,1 - 3 mm) | 300 kg |
| (b) | liant hydraulique (ciment Portland CPA 55) | 400 kg |
| (c) | eau | 250 l |
| (d) | particules de polystyrène (G = 10-15 mm ; P = 14-15 g/l ; et W = 0,5 % p/p) | 860 l |

(où G, P et W sont définis comme indiqué ci-dessus),
en vue d'obtenir un produit du type béton (Ex 2).

On a également préparé un mélange homologue pour comparaison (A2) dans lequel on a remplacé les 860 l de particules de polystyrène hydrophobe par 860 l de particules de polystyrène moins hydrophobe (G = 10-15 mm ; P = 14-15 g/l ; et W = 6 % p/p).

On a ensuite évalué la perte en eau à la température ambiante (15-25°C) selon les modalités indiquées ci-dessus. Les résultats consignés dans le tableau II mettent en évidence l'intérêt des particules de polystyrène hydrophobe selon l'invention.

**TABLEAU II**

| Teneur en eau à la température ambiante (15-25°C) | | |
|---|---|---|
| **Instant** | **Teneur en eau** | |
| | A2 | Ex 2 |
| T = To + 24 h | 11 % | 11 % |
| T = To + 72 h | 9 % | 6.8 % |
| T = To + 168 h | 8.5 % | 5.5 % |
| T = To + 30 j | 7,3 % | 5.5 % |

### EXEMPLE 3 ET ESSAIS COMPARATIFS

On a préparé dans des conditions "tropicales" (température : 45-50°C ; taux d'humidité résiduelle : 60 %), par malaxage dans une bétonnière, une composition selon l'invention comprenant les ingrédients (a), (b), (c) et (d) ci-après :

| | | |
|---|---|---|
| (a) | sable (G = 0,1-3 mm) | 250 kg |
| (b) | liant hydraulique (ciment Portland CPA 45) | 400 kg |
| (c) | eau | 230 l |
| (d) | particules de polystyrène (G = 2-5 mm ; P = 10-15 g/l ; et W = 0,1 % p/p) | 800 l |

(où G, P et W sont définis comme indiqué ci-dessus),
en vue d'obtenir un produit du type béton (Ex 3).

On a également préparé dans les mêmes conditions un mélange homologue pour comparaison (A3) dans lequel on a remplacé les 800 1 de particules de polystyrène hydrophobe par 800 1 de particules de polystyrène moins hydrophobe (G = 2-5 mm ; P = 10-15 g/l ; et W = 6 % p/p).

On a ensuite évalué dans les conditions "tropicales" précitées la perte en eau selon les modalités indiquées ci-dessus. Les résultats consignés dans le tableau III mettent en évidence l'intérêt des particules de polystyrène hydrophobe selon l'invention.

**TABLEAU III**

| Teneur en eau dans des conditions tropicales (45-50°C ; HR = 60 %) | | |
|---|---|---|
| **Instant** | **Teneur en eau** | |
| | A3 | Ex 3 |
| T = To + 24 h | 15% | 15% |
| T = To + 72 h | 12% | 9% |
| T = To + 140 h | 11% | 8,1% |
| T = To + 300 h | 9% | 8,1% |
| T = To + 30 j | 8,6% | 8,0% |

### EXEMPLE 4 ET ESSAIS COMPARATIFS

On a préparé par malaxage dans une bétonnière suivant l'exemple 1 ci-dessus un mélange constitué (suivant leur ordre d'introduction) des ingrédients (a), (b) et (c) ci-après, le liant hydraulique (a) étant ici un liant à prise et durcissement rapides (ciment Portland + plâtre) :

| | | |
|---|---|---|
| (a) | liant hydraulique (pour prise et durcissement rapides) | 400 kg |
| (b) | eau | 160 l |
| (c) | particules de polystyrène (G = 5-10 mm ; P = 10-13 g/l ; et W = 0,2 % p/p) | 800 l |

(où G, P et W sont définis comme indiqué ci-dessus),
en vue d'obtenir un produit de type béton pour chape (Ex 4).

On prépare de la même façon un mélange homologue (A4) dans lequel on a remplacé les 800 1 de particules de polystyrène hydrophobe par 800 l de particules de polystyrène moins hydrophobe (G = 5-10 mm ; P = 10-13 g/l ; et W = 6 % p/p).

On a évalué la perte en eau à la température ambiante (15-25°C) comme indiqué ci-dessus. Les résultats obtenus sont consignés dans le tableau IV ci-après.

**TABLEAU IV**

| Teneur en eau à la température ambiante (15-25°C) | | |
|---|---|---|
| **Instant** | **Teneur en eau** | |
| | A4 | Ex 4 |
| T = To + 3 h | 3.8 % | 3.5 % |
| T = To + 20 h | 2.7 % | 2% |
| T = To + 72 h | 2,1 % | 2 % |

Le tableau IV montre que le produit de l'exemple 4 est déjà stabilisé à l'instant T = To + 20 h.

### EXEMPLE 5

On a préparé par malaxage dans une bétonnière suivant l'exemple 1 ci-dessus un mélange constitué (suivant leur ordre d'introduction) des ingrédients (a), (b) et (c) ci-après :

| | | |
|---|---|---|
| (a) | liant hydraulique (pour prise rapide et retrait compensé à base de ciment de Portland) | 400 kg |
| (b) | eau | 160 l |
| (c) | particules de polystyrène [(G = 1-5 mm ; P = 10-13 g/l ; et W = 0,1 % p/p) sur lesquelles ont été déposés un fluidifiant pour béton et un colloïde entraîneur d'air] | 1 000 l |

(où G, P et W sont définis comme indiqué ci-dessus).
en vue d'obtenir un produit de type béton pour chape.

On a évalué la perte en eau à la température ambiante (15-25°C) comme indiqué ci-dessus. Les résultats obtenus montrent que la teneur en eau résiduelle du produit moulé est de 2 % à l'instant T = To + 24 h et que l'équilibre est obtenu en moins de 24 h.

### EXEMPLE 6

En procédant selon l'exemple 5, mais en remplaçant le liant hydraulique par du ciment Portland normalisé et en rajoutant en tant que charge minérale un sable ou gravier usuel, on observe que l'équilibre est atteint en 7 jours au lieu de 60 à 90 jours pour un béton dépourvu de particules de polystyrène selon l'invention.

## Revendications

1. Utilisation de particules de polymère organique expansé dans la fabrication d'un matériau de construction du type béton, enduit et plâtre allégés, **caractérisée en ce que** l'on fait appel à un granulat comprenant des particules de polymère organique expansé à cellules fermées et hydrophobe ayant une teneur en eau résiduelle, exprimée en poids par rapport au poids dudit granulat, inférieure ou égale à 5,% p/p, et mieux une teneur en eau résiduelle inférieure ou égale à 1 % p/p.

2. Utilisation suivant la revendication 1, **caractérisée en ce que**, après mise en équilibre, le matériau de construction a une teneur en eau résiduelle, exprimée en volume par rapport au volume initial du matériau de construction, inférieure à 100 l/m³ et mieux une teneur en eau résiduelle inférieure ou égale à 60 l/m³.

3. Utilisation suivant la revendication 1, **caractérisée en ce que**, après mise en équilibre, le matériau de construction a une teneur en eau résiduelle comprise entre 20 et 50 l/m³.

4. Utilisation suivant la revendication 1, **caractérisée en ce que** le matériau polymère hydrophobe et expansé est choisi parmi l'ensemble constitué par le polystyrène, les copolymères styrène/hydrocarbure éthyléniquement insaturé et leurs mélanges.

5. Utilisation suivant la revendication 1, **caractérisée en ce que** le matériau polymère hydrophobe et expansé est choisi parmi l'ensemble constitué par
(i) le polystyrène,
(ii) les copolymères styrène/éthylène, styrène/propylène, styrène/butylène, styrène/butadiène et styrène/isoprène ayant un rapport molaire motifs styrène/motifs hydrocarbure éthyléniquement insaturé supérieur ou égal à 1/1, et
(iii) leurs mélanges.

6. Granulat léger, utile notamment dans le domaine des matériaux de construction, **caractérisé en ce qu'**il comprend des particules de polymère organique expansé à cellules fermées et hydrophobe ayant une teneur en eau résiduelle inférieure ou égale à 5 % p/p.

7. Granulat suivant la revendication 6, **caractérisé en ce qu'**il est choisi parmi l'ensemble constitué par le polystyrène, les copolymères styrène/hydrocarbure éthyléniquement insaturé et leurs mélanges.

8. Granulat suivant la revendication 6, **caractérisé en ce qu'**il est choisi parmi l'ensemble constitué par
(i) le polystyrène,
(ii) les copolymères styrène/éthylène, styrène/propylène, styrène/butylène, styrène/butadiène et styrène/isoprène ayant un rapport molaire motifs styrène/motifs hydrocarbure éthyléniquement insaturé supérieur ou égal à 1/1, et
(iii) leurs mélanges.

9. Granulat suivant la revendication 6, **caractérisé en ce qu'**il est préalablement associé à un adjuvant classique des bétons, mortiers, enduits et plâtres allégés, notamment choisi parmi l'ensemble constitué par les agents tensioactifs, les agents fluidisants ou plastifiants et les colloïdes entraîneurs d'air.

10. Granulat suivant la revendication 9, **caractérisé en ce que** ledit adjuvant est lié par adsorption ou par covalence aux particules du polymère organique hydrophobe.

## Patentansprüche

1. Verwendung von Partikeln eines organischen Polymers, das bei der Herstellung eines Baumaterials des Typs Beton, Verputz und Löschgips expandiert wird, **dadurch gekennzeichnet, daß** ein Granulat eingesetzt wird, das Partikel eines organischen Polymers umfaßt, das zu geschlossenen und hydrophoben Zellen expandiert ist, die einen Restwassergehalt besitzen, der ausgedrückt durch das Gewicht in bezug auf das Gewicht des Granulats kleiner oder gleich 5 % und besser einen Restwassergehalt kleiner oder gleich 1 % besitzt.

2. Verwendung nach Anspruch 1, **dadurch gekennzeichnet, daß** nach der Herstellung eines Gleichgewichts das Baumaterial einen Restwassergehalt besitzt, der ausgedrückt durch das Volumen in bezug auf das Anfangsvolumen des Baumaterials kleiner als 100 l/m³ ist, und besser einen Restwassergehalt kleiner oder gleich 60 l/m³ besitzt.

3. Verwendung nach Anspruch 1, **dadurch gekennzeichnet, daß** nach der Herstellung eines Gleichgewichts das Baumaterial einen Restwassergehalt im Bereich von 20 bis 50 l/m³ besitzt.

4. Verwendung nach Anspruch 1, **dadurch gekennzeichnet, daß** das hydrophobe und expandierte Polymermaterial aus der Gruppe gewählt ist, die gebildet ist aus Copolymeren von Styrol und Kohlenwasserstoffen, die in bezug auf Ethyien ungesättigt sind, und ihren Mischungen.

5. Verwendung nach Anspruch 1, **dadurch gekennzeichnet, daß** das hydrophobe und expandierte Polymermaterial aus der Gruppe gewählt ist, die gebildet ist aus
(i) Polystyrol
(ii) Copolymere von Styrol/Ethylen, Styrol/Propylen, Styrol/Butylen, Styrol/Butadien und Styrol/Isopren mit einem Molverhältnis der Styrol-Einheiten zu den in bezug auf Ethylen ungesättigten Kohlenwasserstoff-Einheiten, das größer oder gleich 1/1 ist, und
(iii) ihren Mischungen.

6. Leichtes Granulat, das insbesondere im Gebiet der Baumaterialien verwendet wird, **dadurch gekennzeichnet, daß** es Partikel aus organischem Polymer umfaßt, das zu geschlossenen und hydrophoben Zelien expandiert ist und einen Restwassergehalt kleiner oder gleich 5 % besitzt.

7. Granulat nach Anspruch 6, **dadurch gekennzeichnet, daß** es aus der Gruppe gewählt ist, die gebildet ist aus Polystyrol, Copolymeren aus Styrol und Kohlenwasserstoffen, die in bezug auf Ethylen ungesättigt sind, und ihren Mischungen.

8. Granulat nach Anspruch 6, **dadurch gekennzeichnet, daß** es aus der Gruppe gewählt ist, die gebildet ist aus
(i) Polystyrol
(ii) Copolymere von Styrol/Ethylen, Styrol/Propylen, Styrol/Butylen, Styrol/Butadien und Styrol/Isopren mit einem Molverhältnis der Styrol-Einheiten zu den in bezug auf Ethylen ungesättigten Kohlenwasserstoff-Einheiten, das größer oder gleich 1/1 ist, und
(iii) ihren Mischungen.

9. Granulat nach Anspruch 6, **dadurch gekennzeichnet, daß** ihm im voraus ein herkömmlicher Zusatz für Beton, Mörtel, Verputz und Löschgips zugeordnet wird, der insbesondere aus der Gruppe gewählt ist, die gebildet ist aus grenzflächenaktiven Stoffen, Verflüssigungs- oder Weichmacherstoffen und lufthaltigen Kolloiden.

10. Granulat nach Anspruch 9, **dadurch gekennzeichnet, daß** der Zusatz durch Adsorption oder durch Kovalenz an die Partikel des hydrophoben organischen Polymers gebunden ist.

## Claims

1. A use of particles of expanded organic polymer in the manufacture of a building material of the lightweight concrete, cast or plaster type, **characterized in that** an aggregate is used which comprises particles of hydrophobic closed-cell expanded organic polymer with a residual water content, expressed by weight relative to the weight of said aggregate, less than or equal to 5% w/w, preferably a residual water content less than or equal to 1% w/w.

2. A use according to claim 1, **characterized in that**, after equilibration, the building material has a residual water content, expressed by volume relative to the initial volume of the building material, less than 100 l/m³, preferably a residual water content less than or equal to 60 l/m³.

3. A use according to claim 1, **characterized in that**, after equilibration, the building material has a residual water content of between 20 and 50 l/m³.

4. A use according to claim 1, **characterized in that** the expanded hydrophobic polymer material is selected from the group consisting of polystyrene, styrene/ ethylenically unsaturated hydrocarbon copolymers and mixtures thereof.

5. A use according to claim 1, **characterized in that** the expanded hydrophobic polymer material is selected from the group consisting of
(i) polystyrene,
(ii) styrene/ethylene, styrene/propylene, styrene/butylene, styrene/butadiene and styrene/isoprene copolymers in which the molar ratio of styrene units to ethylenically unsaturated hydrocarbon units is greater than or equal to 1/1, and
(iii) mixtures thereof.

6. A light aggregate, useful especially in the building materials sector, **characterized in that** it comprises particles of hydrophobic closed-cell expanded organic polymer with a residual water content less than or equal to 5% w/w.

7. An aggregate according to claim 6, **characterized in that** it is selected from the group consisting of polystyrene, styrene/ethylenically unsaturated hydrocarbon copolymers and mixtures thereof.

8. An aggregate according to claim 6, **characterized in that** it is selected from the group consisting of
(i) polystyrene,
(ii) styrenelethylene, styrene/propylene, styrene/butylene, styrene/butadiene and styrene/isoprene copolymers in which the molar ratio of styrene units to ethylenically unsaturated hydrocarbon units is greater than or equal to 1/1, and
(iii) mixtures thereof.

9. An aggregate according to claim 6, **characterized in that** it is first associated with a conventional adjuvant for lightweight concretes, mortars, casts and plasters, selected especially from the group consisting of surfactants, fluidizers or plasticizers and air-entraining colloids.

10. An aggregate according to claim 9, **characterized in that** said adjuvant is bound to the particles of hydrophobic organic polymer by adsorption or by covalency.
